# EUROPÄISCHE PATENTSCHRIFT

(11) **EP 1 660 558 B1**
(45) Veröffentlichungstag und Bekanntmachung des Hinweises auf die Patenterteilung: **19.09.2007**
(21) Anmeldenummer: 04764191.5
(22) Anmeldetag: 17.08.2004
(51) Int. Cl.: C08G 65/40

(54) **VERZWEIGTE POLYFORMALE UND COPOLYFORMALE, IHRE HERSTELLUNG UND VERWENDUNG**
BRANCHED POLYFORMALS AND COPOLYFORMALS, THEIR PRODUCTION AND USE
POLYFORMALS ET COPOLYFORMALS RAMIFIES, LEUR PRODUCTION ET LEUR UTILISATION

(30) Priorität: 27.08.2003 DE 10339357
(43) Veröffentlichungstag der Anmeldung: 31.05.2006
(73) Patentinhaber: Bayer MaterialScience AG, 51368 Leverkusen (DE)
(72) Erfinder: HEUER, Helmut-Werner, 47829 Krefeld (DE); WEHRMANN, Rolf, 47800 Krefeld (DE); ONCKELS, Heiner, 47800 Krefeld (DE)
(86) Internationale Anmeldenummer: PCT/EP2004/009201
(87) Internationale Veröffentlichungsnummer: WO 2005/021617

(56) Entgegenhaltungen:
- EP-A- 0 277 627
- WO-A-00/58385
- DE-A- 2 738 962
- US-A- 4 356 290
- PATENT ABSTRACTS OF JAPAN Bd. 0143, Nr. 42 (C-0743), 24. Juli 1990 (1990-07-24) & JP 2 124935 A (IDEMITSU KOSAN CO LTD), 14. Mai 1990 (1990-05-14)

## Beschreibung

Gegenstand der vorliegenden Erfindung sind verzweigte Polyformale und Copolyformale, Verfahren zu deren Herstellung und deren Verwendung zur Herstellung bestimmter Produkte, sowie die daraus erhältlichen Produkte.

Aromatische Polycarbonate gehören zur Gruppe der technischen Thermoplaste. Sie zeichnen sich durch die Kombination der technologisch wichtigen Eigenschaften Transparenz, Wärmeformbeständigkeit und Zähigkeit aus. Zur Gewinnung hochmolekularer linearer Polycarbonate nach dem Phasengrenzflächenverfahren werden im Zweiphasengemisch die Alkalisalze von Bisphenolen mit Phosgen umgesetzt. Das Molekulargewicht kann durch die Menge an Monophenolen wie z.B. Phenol oder tert.-Butylphenol gesteuert werden. Bei diesen Umsetzungen entstehen praktisch ausschließlich lineare Polymere. Dies kann durch Endgruppenanalyse nachgewiesen werden.

Aromatische Polycarbonate auf Basis von Bisphenol A werden insbesondere auch für die Herstellung von optischen Datenträgern verwendet. Sie können jedoch auch bis zu 0,34 Gew.-% Wasser aufnehmen, was sich ungünstig auf die Dimensionsstabilität von Datenträgermaterialien auswirken kann. Für andere, insbesondere Außenanwendungen, stellt wiederum die Hydrolyse ein gewisses Problem dar.

In US B 4 185 009, DE A 25 00 092 und JP B 79039040 ist ein Verfahren beschrieben, in dem ausgehend von Gemischen spezieller Bisphenole mit Kettenabbrechern und Isatinbisphenolen als Verzweiger nach Umsetzung mit Phosgen in einer Phasengrenzflächenreaktion verzweigte, hochmolekulare Polycarbonate erhalten werden können. In DE A 42 40 313 werden Copolycarbonate mit verbesserter Fließfähigkeit auf Basis von Bisphenol A und Bisphenol TMC mit Isatinbiskresol (IBK) als Verzweiger beschrieben.

In DE A 19 913 533 werden hochverzweigte Polycarbonate beschrieben, bei deren Herstellung oligomere oder polymere Verzweiger zum Einsatz kommen. In DE A 19 943 642 sind verzweigte Polycarbonate angegeben, die aufgrund ihrer Strukturviskosität für den Einsatz als Wasserflaschenmaterial geeignet sind.

Weiterhin beschreibt US B 5 367 044 Flaschen aus verzweigtem Polycarbonat, bei dem 1,1,1-Tris-(4-hydroxyphenyl)ethan (THPE) als Verzweiger in Mengen von 0,28-0,36 mol-%) eingesetzt wird.

Verzweigte Polycarbonate sind wegen ihrer im Vergleich zu linearen Polycarbonaten besseren Fließfähigkeit besonders für Anwendungen von Interesse, bei denen gutes Fließen der Polymerschmelze bei höheren Scherraten erwünscht ist, d. h. zum Beispiel beim Spritzgießen komplexer Strukturen. Verzweigte Polycarbonate zeichnen sich durch Strukturviskosität aus und können nicht mehr als Newtonsche Fluide angesehen werden.

Diese aus dem Stand der Technik bekannten Materialien zeigen jedoch bezüglich Ihrer Hydrolyse- und UV-Beständigkeit unbefriedigende Eigenschaften, welche man durch aufwändige und kostenträchtige Additivierung zu verbessern sucht.

Wünschenswert wäre daher ein verzweigtes, idealerweise strukturviskoses, Material, welches sich gleichzeitig durch eine verbesserte Hydrolyse- und/oder UV-Beständigkeit auszeichnet.

Es stellt sich, ausgehend vom Stand der Technik, daher schon lange die Aufgabe ein Material zu finden, welches die typischen Vorteile des Polycarbonats als technischer Thermoplast besitzt, ohne jedoch die genannten Nachteile aufzuweisen.

Es wurde nun überraschend gefunden, dass gewisse verzweigte Polyformale und Copolyformale solche Materialien darstellen.

Aromatische Polyformale stellen ebenfalls transparente Thermoplaste dar, welche aus Bisphenolbausteinen aufgebaut werden. Im Unterschied zu Polycarbonaten besteht das Verknüpfungselement zwischen den Bisphenolbausteinen jedoch nicht aus Carbonateinheiten, sondern aus Vollacetaleinheiten. Stellt bei Polycarbonat Phosgen die Carbonatquelle zur Verknüpfung dar, so übernimmt bei Polyformalen z.B. Methylenchlorid bzw. α,α-Dichlortoluol bei der Polykondensation die Funktion der Quelle der Vollacetal-Verknüpfungseinheit. Man kann Polyformale deshalb auch als Polyacetale ansehen.

Die Herstellung von aromatischen Polyformalen kann im Unterschied zu Polycarbonat in homogener Phase aus Bisphenolen und Methylenchlorid in Gegenwart von Alkalihydroxiden erfolgen. Methylenchlorid fungiert bei dieser Polykondensation gleichzeitig als Reaktand und als Lösungsmittel. Das Molekulargewicht kann wie bei der Polykondensation von Polycarbonat ebenfalls durch geringe Mengen an Monophenol gesteuert werden.

In US B 4,374,974 ist bereits ein Verfahren beschrieben, in dem, ausgehend von speziellen Bisphenolen, nach Umsetzung mit Methylenchlorid, lineare und cyclische Oligo- und Polyformale erhalten werden können. Nachteilig an den hierbei zu erhaltenden Materialien ist der mit mehreren Prozent relativ hohe Anteil an cyclischen Reaktionsprodukten, welche sich sehr nachteilig auf die Mechanik auswirken. Außerdem zeigen die beschriebenen Polyformale sehr ungünstige Quelleigenschaften in organischen Lösungsmitteln, wodurch ein nachträgliches Entfernen der unerwünschten cyclischen Bestandteile nahezu unmöglich ist. Verzweigte Polyformale werden hierin nicht beschrieben.

In DE A 27 38 962 und DE A 28 19 582 werden weitere und ähnliche Polyformale und deren Verwendung als Überzüge oder Filme beschrieben, mit den oben genannten Nachteilen. Auch hier lehrt der Stand der Technik nichts über die Herstellung oder Verwendung von verzweigten Polyformalen oder Copolyformalen.

In EP A 0 277 627 werden Polyformale auf Basis spezieller Bisphenole der Formel 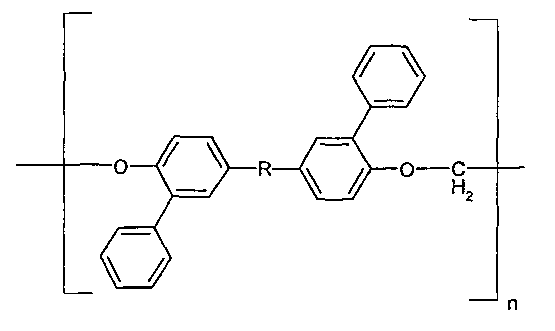 und deren mögliche Verwendung als Materialien für optische Instrumente beschrieben. In dieser Anmeldung wird die Substitution der Bisphenole an den Arylresten als zwingend beschrieben um die optische Anisotropie der Polyformale in einen für optische Anwendungen tauglichen Bereich zu zwingen. Es wird jedoch nichts über verzweigte Polyformale gesagt.

Die im Stand der Technik vorbeschriebenen linearen Polyformale bzw, deren Herstellungsverfahren sind bezüglich ihrer Herstellung unbefriedigend bzw. haben, u.a. auf Grund eines hohen Anteils an cyclischen Nebenprodukten, eine unzureichende Mechanik, was sich z.B. in einer erhöhten Sprödigkeit äußert. Ein Herstellungsverfahren für verzweigte Polyformale bzw. Copolyformale wird im Stand der Technik nicht angegeben. Über das positive rheologische Verhalten von langkettenverzweigten Polyformalen, in Kombination mit hervorragender Hydrolysebeständigkeiten lehrt der Stand der Technik nichts.

Es bestand daher die Aufgabe, hochmolekulare, verzweigte Polyformale bzw. Copolyformale und Verfahren zu deren Herstellung verfügbar zu machen, welche diese Nachteile vermeiden. Diese Aufgabe wird überraschenderweise durch den Einsatz von speziellen Bisphenolen, Methylenchlorid sowie einer trifunktionellen Verbindung als Baustein in Homo- oder Copolyformalen, sowie durch die dadurch zu erhaltenden erfindungsgemäßen verzweigten Polyformale oder Copolyformale bzw. deren Herstellungsverfahren gelöst.

Überraschenderweise wurde dabei auch gefunden, dass die Wasseraufnahme der erhaltenen Polyformale niedrigere Werte als der Stand der Technik bei Polycarbonaten aufweisen. Durch die günstigen Lösungs- bzw. Quelleigenschaften der Materialien können anfallende cyclische Verunreinigungen fast quantitativ abgetrennt werden und liegen dann nur in der gleichen Größenordung wie bei heute gängigen Polycarbonattypen vor. Eine negative Beeinträchtigung der mechanischen Eigenschaften durch cyclische Verunreinigungen kann dadurch nahezu ausgeschlossen werden. Außerdem wurde überraschenderweise gefunden, dass sich durch geeignete Copolymerzusammensetzungen Glastemperaturen von 130 - 170°C realisieren lassen, welche für den technischen Einsatz notwendig sind.

Es war nicht zu erwarten, dass sich auf diese Weise ein hydrolysestabiles Material erzeugen lässt, welches durch seine Langkettenverzweigung gleichzeitig alle Vorteile eines strukturviskosen Polymers, wie z. B. leichteres Verarbeiten im Bereich höherer Scherraten bzw. Schmelzesteifigkeit im Bereich niedriger Scherraten aufweist.

Für Vollacetale, als welche diese Polymere ja zu betrachten sind, vollkommen unerwartet zeigen diese Polyformale nämlich auch eine extreme Hydrolysestabilität bei höheren Temperaturen sowohl in alkalischen als auch in sauren Medium. Außerdem zeigt sich, dass die Polymere selbst im Kochtest in Wasser im Vergleich zu Polycarbonat erheblich stabiler sind.

Gegenstand der Erfindung sind daher verzweigte Polyformale und Copolyformale mit strukturviskosem Verhalten, Verfahren zu deren Herstellung und die Verwendung verzweigter Polyformale bzw. Copolyformale bzw. Verwendung zur Herstellung bestimmter Produkte. Die erfindungsgemäßen Polyformale und Copolyformale basieren auf aromatischen Bisphenolen. Sie enthalten beispielhaft aber nicht ausschließlich Strukturelemente dargestellt durch die allgemeinen Formeln (1a) und (1b), 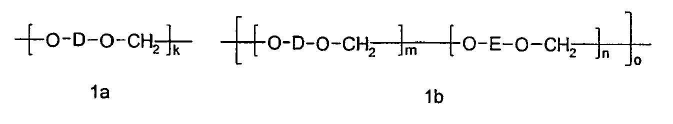 worin die Reste O-D-O und O-E-O für beliebige Diphenolatreste, in denen -E- und -D- unabhängig voneinander einen aromatischen Rest mit 6 bis 40 C-Atomen, bevorzugt 6 bis 21 C-Atomen, darstellen, der einen oder mehrere aromatische oder kondensierte, aromatische Kerne enthalten kann und gegebenenfalls mit C₁-C₁₂-Alkylresten, bevorzugt mit C₁-C₈-Alkylresten, oder Halogen substituiert ist und aliphatische Reste, aromatische Kerne oder Heteroatome, bevorzugt aliphatische Reste als Brückenglieder enthalten kann, wobei besonders bevorzugt mindestens einer der Reste O-D-O und O-E-O für den entsprechenden 1,1-Bis-(4-hydroxyphenyl)-3,3,5-trimethylcyclohexan (Bisphenol TMC)-Rest steht,
und in denen k für eine ganze Zahl zwischen 1 und 4000, bevorzugt zwischen 2 und 2000 besonders bevorzugt zwischen 2 und 1000 und ganz besonders bevorzugt zwischen 2 und 500 und insbesondere bevorzugt zwischen 2 und 300 steht, o für Zahlen zwischen 1 und 4000, bevorzugt zwischen 1 und 2000 besonders bevorzugt zwischen 1 und 1000 und ganz besonders bevorzugt zwischen 1 und 500 und insbesondere bevorzugt zwischen 1 und 300 steht, und m für eine Bruchzahl z/o und n für eine Bruchzahl (o-z)/o steht wobei z für Zahlen zwischen 0 und o steht,
ein Teil der Reste -O-D-O- und -O-E-O- unabhängig voneinander durch ein Verzweigungsmittel mit tri- oder mehrfunkionellen Gruppen ersetzt ist, so dass an der jeweiligen Stelle eine Verzweigung auftritt.

Geeignete Verzweiger sind die in der Polycarbonatchemie bekannten tri- oder polyfunktionellen Verbindungen, insbesondere solche mit drei oder mehr als drei phenolischen OH-Gruppen, bzw. Verbindungen mit mindestens 2 phenolischen OH-Gruppen und einer NH-Gruppe.

Bevorzugt geeignete Verzweiger sind beispielsweise Isatinbiskresol (IBK), Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und für einige Anwendungen sogar bevorzugt 3,3-Bis-(3-methyl-4-hydroxyphenyl)-2-oxo-2,3-dihydroindol.

Die Menge der gegebenenfalls einzusetzenden Verzweiger beträgt 0,01 mol-% bis 3 Mol-%, bezogen wiederum auf Mole an jeweils eingesetzten Diphenolen. Bevorzugt beträgt die Menge an einzusetzendem Verzweiger 0,01 bis 2 mol-%, besonders bevorzugt 0,01 bis 1 mol-% und ganz besonders bevorzugt 0,01 bis 0,6 mol%.

Besonders bevorzugt als Verzweiger sind Isatinbisphenole, wie z.B. Isatinbiskresol (IBK) und 1,1,1-Tri-(4-hydroxyphenyl)-ethan (THPE).

Ganz besonders bevorzugt als Verzweiger ist Isatinbiskresol, wodurch sich dann ganz besonders bevorzugte Strukturelemente als Verzweigungsstelle im Polyformal bzw. Copolyformal gemäß Formel 2 ergeben:

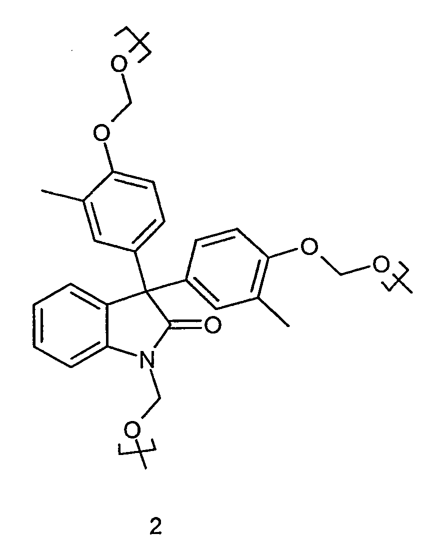

Somit können -O-D-O- und -O-E-O- unabhängig voneinander besonders bevorzugt für einen von IBK als Verzweiger abgeleiteten Rest nach Formel 2 stehen womit dann an der entsprechenden Stelle eine dritte Verknüpfungsstelle, eine Verzweigung der Polymerkette, auftritt.

Über die NH-Funktionalität von IBK ergibt sich dann an dieser Stelle die dritte Verknüpfungsstelle, was zu der gewünschten Verzweigung der Polymerhauptkette führt.

Bevorzugte Struktureinheiten der erfindungsgemäßen verzweigten Polyformale bzw. Copolyformale leiten sich von allgemeinen Strukturen der Formeln (2a) bis (2d) ab, 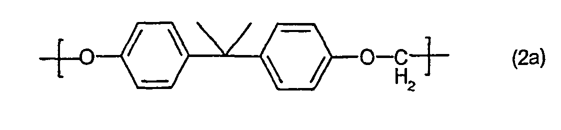 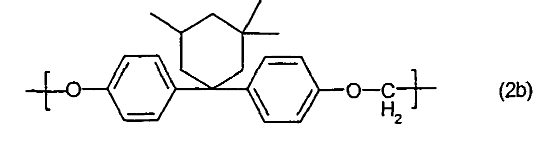 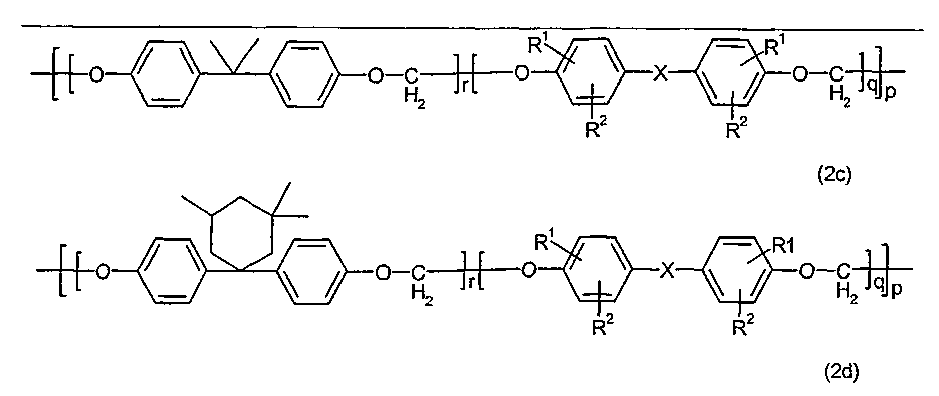 in denen R¹ und R² unabhängig voneinander für H, lineare oder verzweigte C₁-C₁₈ Alkyl- oder Alkoxyreste, Halogen wie Cl oder Br oder für einen gegebenenfalls substituierten Aryl- oder Aralkylrest, bevorzugt für H oder lineare oder verzweigte C₁-C₁₂ Alkyl-, besonders bevorzugt für H oder C₁-C₈ Alkylreste und ganz besonders bevorzugt für H oder Methyl stehen,

X für eine Einfachbindung, einen C₁- bis C₆-Alkylen-, C₂- bis C₅-Alkyliden-, C₅- bis C₆-Cycloalkylidenrest, der mit C₁- bis C₆-Alkyl, vorzugsweise Methyl- oder Ethylresten substituiert sein kann, oder einen C₆- bis C₁₂-Arylenrest, der gegebenenfalls mit weiteren Heteroatome enthaltenden aromatischen Ringen kondensiert sein kann, steht, wobei p für eine ganze Zahl zwischen 1 und 4000, bevorzugt zwischen 2 und 2000 besonders bevorzugt zwischen 2 und 1000 und ganz besonders bevorzugt zwischen 2 und 500 und insbesondere zwischen 2 und 300 steht,
und wobei ein Teil der Diphenole durch ein oder mehrere Verzweigungsmittel mit mindestens trifunktionellen Gruppen ersetzt ist, was zur gewünschten Verzweigung führt.

Besonders bevorzugt leiten sich die Diphenolatreste, soweit sie keine Verzweigungsstellen darstellen, in den Formeln (2a) bis (2d) von den im folgenden noch genannten, geeigneten Diphenolen ab.

Beispielhaft werden für die Diphenole, die der allgemeinen Formel (2) zugrundeliegen, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω- Bis-(hydroxyphenyl)-polysiloxane genannt.

Bevorzugte Diphenole sind beispielsweise 4,4'-Dihydroxybiphenyl (DOD), 4,4'-Dihydroxybiphenylether (DOD-Ether), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,3-Bis-[2-(4-hydroxyphenyl)-2-propyl]benzol (Bisphenol M), 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind 2,2-Bis-(4-hydroxyphenyl)-propan (Bisphenol A), 4,4'-Dihydroxybiphenyl (DOD), 4,4'-Dihydroxybiphenylether (DOD-Ether), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Die Diphenole können sowohl allein als auch im Gemisch miteinander verwendet werden; es sind sowohl Homopolyformale als auch Copolyformale einbezogen. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Gegenstand der vorliegenden Erfindung ist die Verwendung von verzweigten, strukturviskosen Polyformalen bzw. Copolyformalen der Formel (2a) bis (2d) zur Herstellung von Bauteilen wie z.B. Platten, Stegplatten, Doppelstegplatten, Wellplatten oder Flaschen wie Wasser- oder Babyflaschen oder Behältnisse zur Aufbereitung von verschmutztem Wasser mittels verschiedenen Verfahren wie Extrusion, Spritzguss, Extrusionsblasformen oder Streckblasformen.

Ebenfalls Gegenstand der vorliegenden Erfindung sind die verzweigten Polyformale bzw. Copolyformale der Formel (2a) bis (2d) selbst.

Die vorliegende Erfindung betrifft weiterhin ein Verfahren zur Herstellung von verzweigten Polyformalen und Copolyformalen der Formeln (2a) bis (2d) dadurch gekennzeichnet, dass Bisphenole, Verzweiger und Kettenabbrecher in homogener Lösung aus Methylenchlorid oder α,α-Dichlortoluol und einem geeigneten hochsiedenden Lösungsmittel wie beispielsweise N-Methylpyrrolidon (NMP), Dimethylformamid (DMF), Dimethylsulfoxid (DMSO), N-Methylcaprolactam (NMC), Chlorbenzol, Dichlorbenzol oder Tetrahydrofuran (THF) in Gegenwart einer Base, bevorzugt Natriumhydroxid oder Kaliumhydroxid, bei Temperaturen zwischen 30 und 80°C zur Reaktion gebracht werden. Bevorzugte hochsiedende Lösungsmittel sind NMP, DMF, DMSO und NMC, besonders bevorzugt NMP, NMC, DMSO und ganz besonders bevorzugt NMP und NMC. Die Reaktionsführung kann auch mehrstufig erfolgen. Die Abtrennung der cyclischen Verunreinigungen erfolgt nach Neutralwäsche der organischen Phase durch einen Fällprozess in bzw. durch einen fraktionierten Knetprozess des Rohproduktes mit einem die cyclischen Verbindungen lösenden Lösungsmittel, z.B. Aceton. Die cyclischen Verunreinigungen lösen sich nahezu vollständig im Lösungsmittel und können durch portionsweises Kneten und Wechseln des Lösungsmittels fast vollständig abgetrennt werden. Durch Einsatz von bspw. ca. 10 Litern Aceton, welches in beispielsweise 5 Portionen zu einer Polyformalmenge von ca. 6 kg zugegeben wird kann ein Gehalt an Zyklen nach Kneten deutlich unter 1 % erreicht werden.

Die zyklischen Polyformale und Copolyformale können auch durch einen Fällprozess in geeignete Lösungsmittel, die als Nichtlöser für das gewünschte Polymer und als Löser für die unerwünschten Zyklen fungieren, abgetrennt werden. Bevorzugt handelt es sich hierbei um Alkohole oder Ketone.

Unter Bisphenolen sind die o. g. Diphenole zu verstehen. Unter Verzweiger sind die ebenfalls oben genannten trifunktionellen Verbindungen zu verstehen. Bei dem 2.Reaktanden handelt es sich um Methylenchlorid oder α,α-Dichlortoluol.

Die Reaktionstemperatur beträgt 30°C bis 160°C, bevorzugt 40°C bis 100°C besonders bevorzugt 50°C bis 80°C und ganz besonders bevorzugt 60°C bis 80°C.

Die Molekulargewichte Mw der erfindungsgemäßen verzweigten Polyformale und Copolyformale liegen im Bereich von 600 bis 1 000 000 g/mol, bevorzugt zwischen 600 und 500 000 g/mol besonders bevorzugt zwischen 600 und 250 000 g/mol und ganz besonders bevorzugt zwischen 600 und 120 000 g/mol und insbesondere zwischen 600 und 80 000 g/mol, insbesondere 10.000 bis 70 000 g/mol (bestimmt mittels GPC und Polycarbonateichung).

Bevorzugt, besonders bevorzugt oder ganz besonders bevorzugt sind Ausführungsformen, welche von den unter bevorzugt, besonders bevorzugt oder ganz besonders bevorzugt bzw., vorzugsweise etc. genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die erfindungsgemäßen verzweigten Polyformale und Copolyformale können in bekannter Weise aufgearbeitet und zu beliebigen Formkörpern verarbeitet werden, beispielsweise durch Extrusion, Extrusionsblasformen oder Spritzguss. Die dabei erhaltenen Bauteile können auch mit weiteren Schichten (z.B. Coextrusionsschutzschicht mit UV-Schutz) versehen sein.

Den erfindungsgemäßen verzweigten Polyformalen und Copolyformalen können noch andere Polymere wie bspw. aromatische Polycarbonate und/oder andere aromatische Polyestercarbonate und/oder andere aromatische Polyester in bekannter Weise zugemischt werden.

Den erfindungsgemäßen verzweigten Polyformalen und Copolyformalen können noch die für Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z.B. Alkyl- und Arylphosphite, -phosphate, -phosphane, -niedermolekulare Carbonsäureester, Halogenverbindungen, Salze, Kreide, Quarzmehl, Glas- und Kohlenstofffasem, Pigmente und deren Kombination. Solche Verbindungen werden z. B. in WO 99/55772, S. 15 - 25, und in den entsprechenden Kapiteln des "Plastics Additives Handbook" , ed. Hans Zweifel, 5th Edition 2000, Hanser Publishers, Munich. beschrieben).

Die erfindungsgemäßen verzweigten Polyformale und Copolyformale, gegebenenfalls in Abmischung mit anderen Thermoplasten und/oder üblichen Additiven, können, zu beliebigen Formkörpern/Extrudaten verarbeitet, überall dort eingesetzt werden, wo bereits bekannte Polycarbonate, Polyestercarbonate und Polyester eingesetzt werden. Aufgrund ihres Eigenschaftsprofils eignen sie sich insbesondere als Materialien für die Extrusionsverarbeitung zur Herstellung von Artikeln für die Außenanwendung oder für die Extrusionsblasverformung zur Herstellung von Flaschenartikel oder komplizierter geformten Bauteilen mit mehreren Krümmungen.
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-B 1 031 507).
8. Zur Herstellung von Fäden und Drähten (siehe beispielsweise DE-B 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreuenden Formteilen.
11. Zur Herstellung von Präzisionsspritzgussteilen, wie beispielsweise Linsenhalterungen. Hierzu verwendet man Polyformale mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-A 2 701 173).
13. Als Lichtübertragungsträger, insbesondere als Lichtleiterkabel (siehe beispielsweise EP-A 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z. B. Scheinwerferlampen, als sogenannte "head-lamps", Streulichtscheiben oder innere Linsen.
19. Für medizinische Anwendungen, z.B. Oxygenatoren, Dialysatoren.
20. Für Lebensmittelanwendungen, wie z. B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger gegebenenfalls in Form geeigneter Blends mit AB S oder geeigneten Kautschuken.
22. Für Sportartikel, wie z. B. Slalomstangen oder Skischuhschnallen.
23. Für Haushaltsartikel, wie z. B. Küchenspülen und Briefkastengehäuse.
24. Für Gehäuse, wie z. B. Elektroverteilerschränke.
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige.
32. Behältnisse zur Aufbereitung/Reinigung von verschmutztem Wasser

Die Formkörper und optischen Datenspeicher aus den erfindungsgemäßen Polymeren sind ebenfalls Gegenstand dieser Anmeldung.

Die nachfolgenden Beispiele sollen die Erfindung illustrieren ohne sie jedoch einzuschränken.

### Beispiele:

### Vergleichsbeispiel 1

Lineares Homopolyformal aus Bisphenol A : 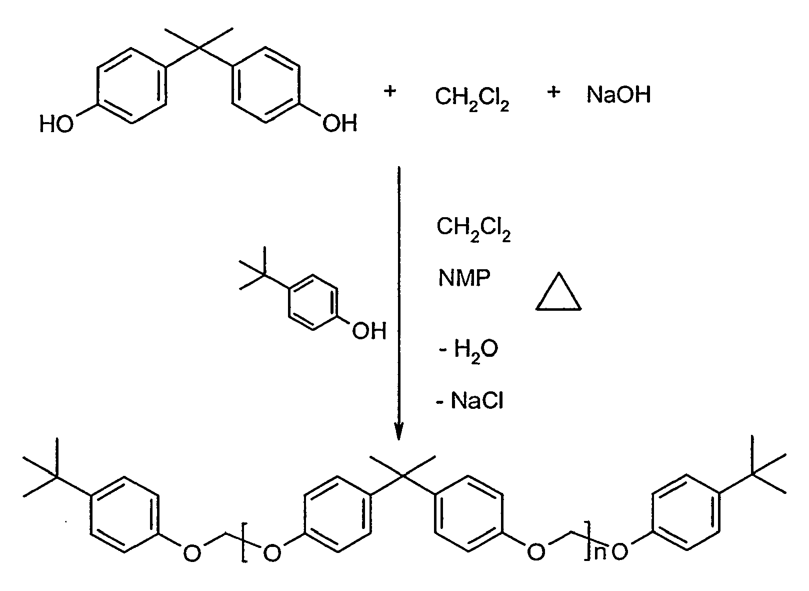 7 kg (30,66 mol) Bisphenol A (Bayer AG), 3,066 kg (76,65 mol) Natriumhydroxid-Plätzchen und 69,4 g (0,462 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit 20 1 Methylenchlorid und 20 1 entmineralisiertem Wasser verdünnt. In einem Separator wird der Ansatz mit Wasser neutral und salzfrei (Leitfähigkeit < 15 µS.cm⁻¹)gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 200°C mit abschließender Granulierung. Die beschriebene Syntheseprozedur, sowie die Extrusion zur Isolierung des Polymers wird 2-mal komplett durchgeführt, um auf eine Gesamtmenge von etwas über 10 kg Material zu kommen. Dabei erhält man nach dem Verwerfen von Vorlaufmaterial insgesamt 11,99 kg Polyformal als transparentes Granulat.

### Analytik:

- Molekulargewicht Mw = 31732, Mn = 3465 nach GPC (Eichung gegen Polycarbonat). Hierbei wurden die Zyklen nicht abgetrennt. Ein Anquellen des Materials mit Aceton ist nicht möglich, wodurch das Abtrennen der Zyklen ebenfalls nicht möglich ist.
- Glastemperatur Tg = 89°C
- Relative Lösungsviskosität in Methylenchlorid (0,5 g/100 ml Lösung) = 1,237 / 1,238

### Vergleichsbeispiel 2

Synthese eines linearen Copolyformals aus Bisphenol TMC und Bisphenol A: 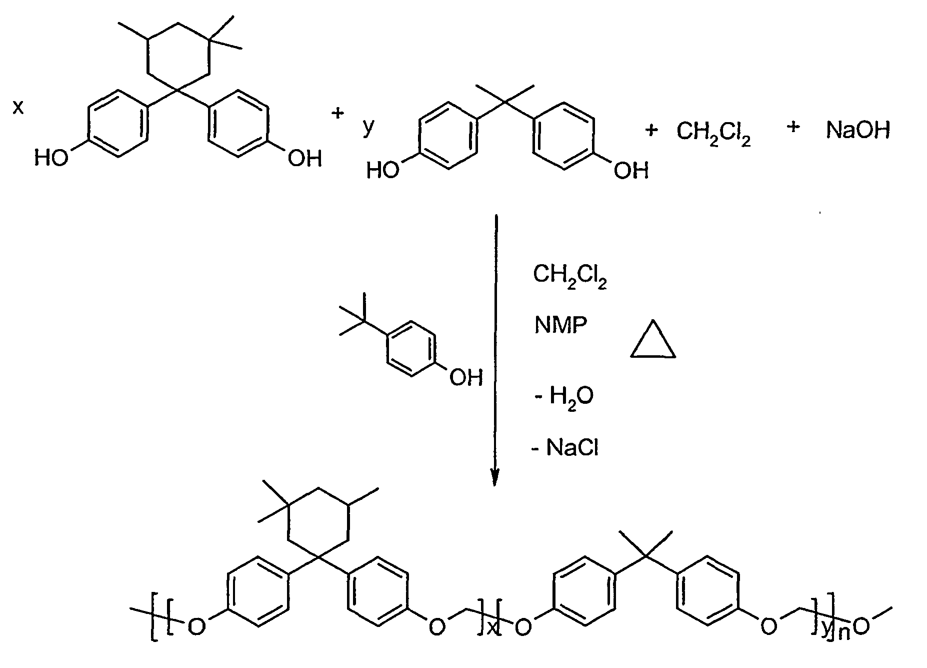 5,432 kg (17,5 mol) Bisphenol TMC (x=70 mol-%), 1,712 kg (7,5 mol) Bisphenol A (y=30 mol-%), 2,5 kg (62,5 mol) Natriumhydroxid-Plätzchen und 56,33 g (0,375 mol, 1,5 mol-% bzgl. Bisphenol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit 35 1 Methylenchlorid und 20 1 entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 280°C mit abschließender Granulierung. Dabei erhält man nach dem Verwerfen von Vorlaufmaterial insgesamt 5,17 kg Copolyformal als transparentes Granulat. Dieses enthält noch niedermolekulare Ringe als Verunreinigung. Das Material wird mit ca. 5 1 Aceton über Nacht angequollen. Die erhaltenen Masse wird mit mehreren Portionen frischem Aceton solange geknetet, bis keine Ringe mehr nachgewiesen werden können. Das aufgereinigte Material wird in Chlorbenzol aufgelöst und nochmals bei 280°C über den Ausdampfextruder extrudiert. Dabei erhält man nach dem Verwerfen von Vorlaufmaterial das zyklenfreie Polyformal als transparentes Granulat.

### Analytik:

- Molekulargewicht Mw = 36960, Mn = 18815, D = 1,96 nach GPC (Eichung gegen Polycarbonat).
- Glastemperatur Tg = 147°C
- Relative Lösungsviskosität in Methylenchlorid (0,5 g/100 ml Lösung) = 1,244 /1,244

### Beispiel 1:

Langkettenverzweigtes Homopolyformal aus Bisphenol A: 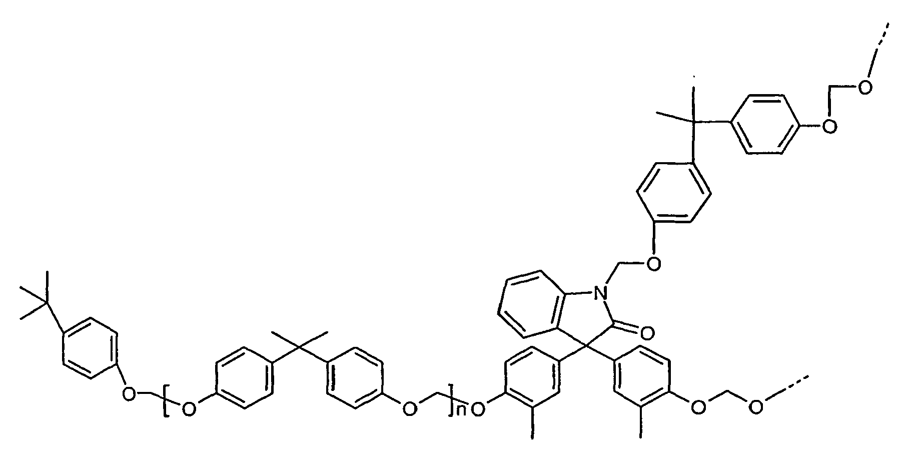 31,96 g (0,14 mol) Bisphenol A (Bayer AG), 14,0 g (0,35 mol) Natriumhydroxid-Plätzchen, 0,21 g (0,0014 mol, 1 mol-% bzgl. Bisphenol) fein gemörsertes p-tert-Butylphenol (Aldrich) und 0,193 g (0,00056 mol, 0,4 mol-% bzgl. Bisphenol) Isatinbiskresol (IBK) werden zu einem Lösungsmittelgemisch aus 125 ml Methylenchlorid und 225 ml N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit Methylenchlorid und entmineralisiertem Wasser verdünnt. Anschließend wird die organische Phase mit Wasser neutral und salzfrei (Leitfähigkeit < 15 µS.cm⁻¹) gewaschen. Das Polymer wird schließlich in Methanol gefällt. Nach dem Nachwaschen mit Methanol und Trocknen im Vakuumtrockenschrank bei 80°C erhält man 29,2 g weißes Polyformal. Das noch zyklenenthaltende Polymer wird anschließend mit etwas Aceton behandelt und getrocknet. Die Ausbeute an verzweigtem, zyklenfreiem Material beträgt 22,3 g eines wollweißen Polymers.

### Analytik:

- Molekulargewicht Mw = 30589, Mn = 9015 nach GPC (Eichung gegen Polycarbonat).
- Relative Lösungsviskosität in Methylenchlorid (0,5 g/100 ml Lösung) = 1,224 /1,220

### Beispiel 2:

Langkettenverzweigtes Copolyformal aus Bisphenol A und Bisphenol TMC: 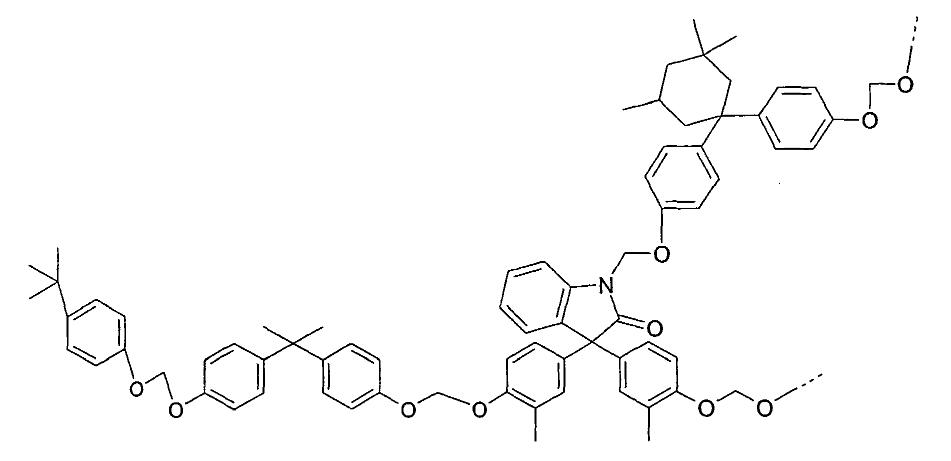 5,432 kg (17,5 mol) Bisphenol TMC (x=70 mol-%), 1,712 kg (7,5 mol) Bisphenol A (y=30 mol-%), 2,5 kg (62,5 mol) Natriumhydroxid-Plätzchen, 56,33 g (0,375 mol, 1,5 mol-% bzgl. Bisphenol) fein gemörsertes p-tert-Butylphenol (Aldrich) in 500 ml Methylenchlorid und 43,175 g (0,125 mol, 0,5 mol-% bzgl. Bisphenol) Isatinbiskresol (IBK) werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit Methylenchlorid und entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 260°C mit abschlie-ßender Granulierung. Dabei erhält man nach dem Verwerfen von Vorlaufmaterial Copolyformal als transparentes Granulat. Dieses enthält noch niedermolekulare Ringe als Verunreinigung. Das Material wird mit ca. 5 1 Aceton über Nacht angequollen. Die erhaltenen Masse wird mit mehreren Portionen frischem Aceton solange geknetet, bis keine Ringe mehr nachgewiesen werden können. Das aufgereinigte Material wird in Chlorbenzol aufgelöst und nochmals bei 260°C über den Ausdampfextruder extrudiert. Dabei erhält man nach dem Verwerfen von Vorlaufmaterial das zyklenfreie, verzweigte Polyformal als transparentes Granulat.

### Analytik:

- Molekulargewicht Mw = 42687, Mn = 19784, D = 2,16 nach GPC (Eichung gegen Polycarbonat).

### Beispiel 3:

### Langkettenverzweigte Copolyformale aus Bisphenol A und Bisphenol TMC:

Analog Beispiel 2 werden weitere verzweigte Copolyformale hergestellt. Sie unterscheiden sich lediglich in der Menge an eingesetztem Verzweiger IBK:

### Analytik:

### a) IBK-Menge (0,6 mol-%):

- Molekulargewicht Mw = 42796, Mn = 20075 nach GPC (Eichung gegen Polycarbonat).

### b) IBK-Menge (0,7 mol-%):

- Molekulargewicht Mw = 43603, Mn = 20098 nach GPC (Eichung gegen Polycarbonat).

### Eigenschaften der Polymere:

### Ermittlung der Viskosität als Funktion der Schergeschwindigkeit (ISO 11443) an der langkettenverzweigten Polymerprobe aus Beispiel 2:

Das in Beispiel 2 erhaltene verzweigte Copolyformal wird bei 260, 280 und 300°C rheologisch untersucht. Kapillare (D/L) ist dabei 20. Dabei werden folgende Daten erhalten:

| Schergefälle [s⁻1] | Viskosität / 260 °C [Pas] | 280°C [Pas] | 300°C [Pas] |
|---|---|---|---|
| 50 | 4616 | 2339 | 1358 |
| 100 | 3209 | 1743 | 1058 |
| 200 | 2120 | 1247 | 796 |
| 500 | 1159 | 739 | 505 |
| 1000 | 704 | 469 | 346 |
| 1500 | 521 | 359 | 268 |
| 5000 | 246 | 152 | 117 |

### Ermittlung der Viskosität als Funktion der Schergeschwindigkeit (ISO 11443) an der linearen Polymerprobe aus Vergleichsbeispiel 2:

Das in Vergleichsbeispiel 2 erhaltene lineare Copolyformal wird bei 260, 280 und 300°C rheologisch untersucht. Kapillare (D/L) ist dabei 20. Dabei werden folgende Daten erhalten:

| Schergefälle [s⁻¹] | Viskosität / 260 °C [Pas] | 280°C [Pas] | 300°C [Pas] |
|---|---|---|---|
| 50 | 3464 | 1693 | 898 |
| 100 | 2568 | 1406 | 806 |
| 200 | 1758 | 1074 | 671 |
| 500 | 961 | 651 | 458 |
| 1000 | 587 | 415 | 311 |
| 1500 | 445 | 314 | 241 |
| 5000 | 182 | 130 | 103 |

Wie aus dem Vergleich der Viskositätsdaten zwischen Beispiel 5 und 6 zu ersehen, steigt die Scherviskosität bei kleineren Schergeschwindigkeiten an der Probe aus Beispiel 2 gegenüber der Probe aus Vergleichsbeispiel 2 deutlich an.

### Ermittlung der Viskosität als Funktion der Schergeschwindigkeit (ISO 11443) an der langkettenverzweigten Polymerprobe aus Beispiel 3a):

Das in Beispiel 3a) erhaltene verzweigte Copolyformal wird bei 260, 280 und 300°C rheologisch untersucht. Kapillare (D/L) ist dabei 20. Dabei werden folgende Daten erhalten:

| Schergefälle [s⁻¹] | Viskosität / 260°C [Pas] | 280°C [Pas] | 300°C [Pas] |
|---|---|---|---|
| 50 | 4362 | 2517 | 1492 |
| 100 | 3085 | 1836 | 1144 |
| 200 | 2136 | 1306 | 845 |
| 500 | 1208 | 777 | 530 |
| 1000 | 753 | 501 | 358 |
| 1500 | 560 | 379 | 274 |
| 5000 | - | 154 | 120 |

### Ermittlung der Viskosität als Funktion der Schergeschwindigkeit (ISO 11443) an der langkettenverzweigten Polymerprobe aus Beispiel 3b):

Das in Beispiel 3b) erhaltene verzweigte Copolyformal wird bei 260, 280 und 300°C rheologisch untersucht. Kapillare (D/L) ist dabei 20. Dabei werden folgende Daten erhalten:

| Schergefälle [s⁻¹] | Viskosität / 260°C [Pas] | 280°C [Pas] | 300°C [Pas] |
|---|---|---|---|
| 50 | 4476 | 2499 | 1574 |
| 100 | 3150 | 1791 | 1188 |
| 200 | 2147 | 1282 | 870 |
| 500 | 1195 | 764 | 545 |
| 1000 | 740 | 500 | 366 |
| 1500 | 551 | 381 | 283 |
| 5000 | - | 156 | 122 |

| | | | |
|---|---|---|---|
| SV-Zahl als Charakterisierung der Langkettenverzweigung bei 280 und 300°C | | | |

Zur Charakterisierung der Verzweigung der Polyformale wurde die SV-Zahl herangezogen. Die SV-Zahl ist definiert als der Quotient aus den Schmelzviskositäten bei einer Scherrate von 50 s⁻¹ und 5x10³ s⁻¹. Je größer die SV-Zahl ist, desto größer ist die Abweichung vom Newtonschen Fließverhalten, d.h. um so größer ist die Strukturviskosität.

### a) Temperatur 280°C:

| Polyformal aus Beispiel | | Visk./ Scherrate 50 s⁻¹ | 5x10³ s⁻¹ | SV-Zahl |
|---|---|---|---|---|
| | 2 | 2339 | 152 | 15,39 |
| Vergleichsbeispiel | 2 | 1693 | 130 | 13,02 |
| | 3a | 2517 | 154 | 16,34 |
| | 3b | 2499 | 156 | 6,02 |

### b) Temperatur 300°C:

| Polyformal aus Beispiel | | Visk./ Scherrate 50 s⁻¹ | 5x10³ s⁻¹ | SV-Zahl |
|---|---|---|---|---|
| | 2 | 1358 | 117 | 11,61 |
| Vergleichsbeispiel | 2 | 898 | 103 | 8,72 |
| | 3a | 1492 | 120 | 12,43 |
| | 3b | 1574 | 122 | 12,90 |

| | | | | |
|---|---|---|---|---|
| SV-Zahl als Charakterisierung der Langkettenverzweigung bei 260 und 300°C | | | | |

Zur Charakterisierung der Verzweigung der Polyformale kann auch eine leicht anders definierte SV-Zahl herangezogen werden. Diese SV=Zahl ist definiert als der Quotient aus den Schmelzviskositäten bei einer Scherrate von 50 s⁻¹ und 10³ s⁻¹. Je größer die SV-Zahl ist, desto größer ist die Abweichung vom Newtonschen Fließverhalten, d.h. um so größer ist die Strukturviskosität.

### a) Temperatur 260°C:

| Polyformal aus Beispiel | | Visk./ Scherrate 50 s⁻¹ | 10³ s⁻¹ | SV-Zahl |
|---|---|---|---|---|
| | 2 | 4616 | 704 | 6,56 |
| Vergleichsbeispiel | 2 | 3464 | 1693 | 2,04 |
| | 3a | 4362 | 753 | 5,80 |
| | 3b | 4476 | 740 | 6,04 |

### b) Temperatur 300°C:

| Polyformal aus Beispiel | | Visk./ Scherrate 50 s⁻¹ | 10³ s⁻¹ | SV-Zahl |
|---|---|---|---|---|
| | 2 | 1358 | 311 | 3,92 |
| Vergleichsbeispiel | 2 | 898 | 358 | 2,89 |
| | 3a | 1492 | 1492 | 4,16 |
| | 3b | 1574 | 1574 | 4,30 |

Wie anhand der ermittelten SV-Zahl zu ersehen ist, handelt es sich bei den Polymerproben aus Beispiel 2, 3a und 3b eindeutig um strukturviskose Materialien. Im Vergleich zur SV-Zahl der linearen Probe aus Vergleichsbeispiel 2 sind die SV-Zahlen der verzweigten Materialien signifikant größer.

## Patentansprüche

1. Verzweigte Polyformale bzw. Copolyformale der allgemeinen Formeln (1a) und (1b), 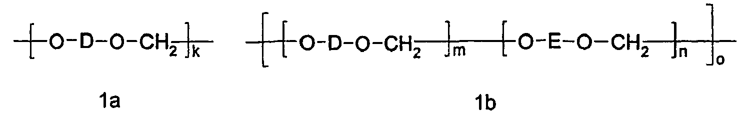 worin die Reste O-D-O und O-E-O für beliebige Diphenolatreste, in denen -E- und D- unabhängig voneinander ein aromatischer Rest mit 6 bis 40 C-Atomen ist, der einen oder mehrere aromatische oder kondensierte, gegebenenfalls Heteroatome enthaltende aromatische Kerne enthalten kann und gegebenenfalls mit C₁-C₁₂-Alkylresten oder Halogen substituiert ist und aliphatische Reste, cycloaliphatische Reste, aromatische Kerne oder Heteroatome als Brückenglieder enthalten kann und in denen k für eine ganze Zahl zwischen 1 und 4000 steht, o für Zahlen zwischen 1 und 4000 und m für eine Bruchzahl z/o und n für eine Bruchzahl (o-z)/o steht wobei z für Zahlen zwischen 0 und o steht und ein Teil der Reste -O-D-O- und -O-E-O- unabhängig voneinander durch ein oder mehrere trifunktionelle Verzweigungsmittel ersetzt ist, womit dann an dieser Stelle eine dritte Verknüpfungsstelle, eine Verzweigung der Polyformalkette auftritt.

2. Verzweigte Polyformale bzw. Copolyformale gemäß Anspruch 1 **dadurch gekennzeichnet dass** mindestens einer der Reste O-D-O und O-E-O für den entsprechenden 1,1-Bis-(4-hydroxyphenyl)-3,3,5-trimethylcyclohexan (Bisphenol TMC)-Rest steht.

3. Verzweigte Polyformale bzw. Copolyformale gemäß Anspruch 1 **dadurch gekennzeichnet, dass** -O-D-O- und -O-E-O- unabhängig voneinander für einen von 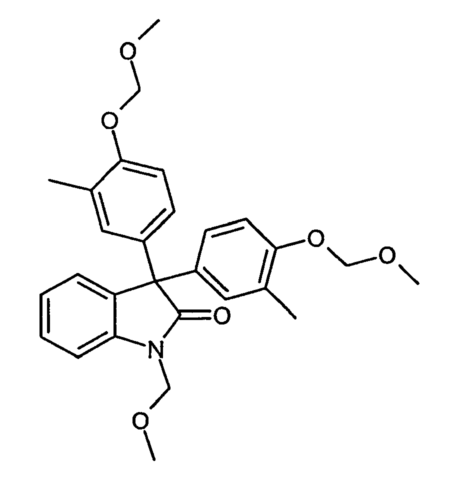 abgeleiteten Rest, stehen.

4. Verwendung von verzweigten Poly- und Copolyformalen gemäß Anspruch 1 zur Herstellung von Formkörpern und Extrudaten.

5. Formkörper und Extrudate enthaltend die Polyformale gemäß Anspruch 1.

6. Platten, Folien, Flaschen und Behältnisse enthaltend die Polyformale gemäß Anspruch 1.

7. Optische Datenspeicher enthaltend die Polyformale gemäß Anspruch 1.

8. Verfahren zur Herstellung der verzweigten Polyformale und Copolyformale gemäß Anspruch 1 durch Umsetzung von Bisphenolen und Verzweigern mit Methylenchlorid oder α,α-Dichlortoluol in einer homogenen Lösung in einem geeigneten hochsiedenden Lösungsmittel in Gegenwart einer Base, bei Temperaturen zwischen 30 und 160°C.

9. Verfahren zur Herstellung der verzweigten Polyformale und Copolyformale gemäß Anspruch 8, **dadurch gekennzeichnet, dass** durch einen Fäll- oder Knetprozess mit Aceton cyclische Verunreinigungen abgetrennt werden.

## Claims

1. Branched polyformals and copolyformals of the general formulae (1a) and (1b) 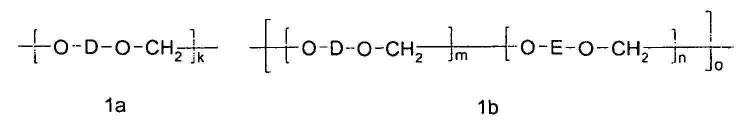 wherein the radicals O-D-O and O-E-O represent any desired diphenolate radicals in which -E- and -D-independently of one another are an aromatic radical having 6 to 40 C atoms which can contain one or more aromatic nuclei or fused aromatic nuclei optionally containing heteroatoms and is optionally substituted by C₁-C₁₂-alkyl radicals or halogen and can contain aliphatic radicals, cycloaliphatic radicals, aromatic nuclei or heteroatoms as bridge members, and in which k represents an integer between 1 and 4,000, o represents numbers between 1 and 4,000 and m represents a fraction z/o and n represents a fraction (o-z)/o, wherein z represents numbers between 0 and o and some of the radicals O-D-O and O-E-O independently of one another is replaced by one or more trifunctional branching means with which a third branching site, a branching of the polymerformal chain, occurs at this site.

2. Branched polyformals and copolyformals according to claim 1, **characterized in that** at least one of the radicals O-D-O and O-E-O represents the corresponding 1,1-bis-(4-hydroxyphenyl)-3,3,5-trimethylcyclohexane (bisphenol TMC) radical.

3. Branched polyformals and copolyformals according to claim 1, **characterized in that** -O-D-O- and -O-E-O-independently of one another represent a radical derived from

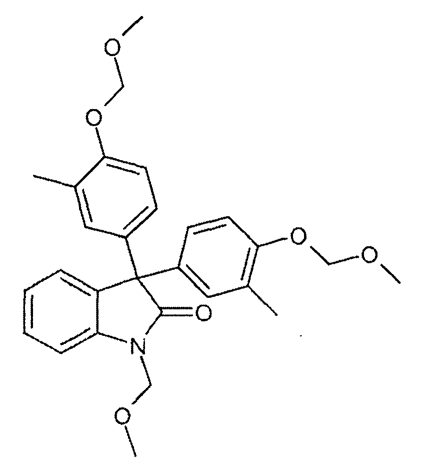

4. Use of branched poly- and copolyformals according to claim 1 for the preparation of shaped articles and extrudates.

5. Shaped articles and extrudates comprising the polyformals according to claim 1.

6. Sheets, films, bottles and containers comprising the polyformals according to claim 1.

7. Optical data stores comprising the polyformals according to claim 1.

8. Process for the preparation of the branched polyformals and copolyformals according to claim 1 by reaction of bisphenols and branching agents with methylene chloride or α,α-dichlorotoluene in a homogeneous solution in a suitable high-boiling solvent in the presence of a base at temperatures of between 30 and 160°C.

9. Process for the preparation of the branched polyformals and copolyformals according to claim 8, **characterized in that** cyclic impurities are separated off by a precipitation or kneading process with acetone.

## Revendications

1. Polyformals et copolyformals ramifiés répondant aux formules générales respectives (Ia) et (Ib), 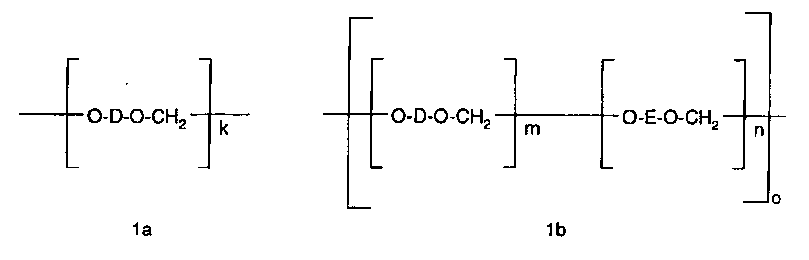 dans lesquelles les radicaux O-D-O et O-E-O sont des radicaux de diphénolates quelconques, -E- et -D- représentant chacun, indépendamment l'un de l'autre, un radical aromatique contenant 6 à 40 atomes de carbone qui peut contenir un ou plusieurs noyaux aromatiques ou noyaux aromatiques condensés contenant le cas échéant des hétéroatomes, est éventuellement substitué par des groupes alkyles en C₁-C₁₂ ou des halogènes et peut contenir sous forme de ponts des radicaux aliphatiques, des radicaux cycloaliphatiques, des noyaux aromatiques ou des hétéroatomes, k est un nombre entier allant de 1 à 4 000, o est un nombre allant de 1 à 4 000, m est un nombre fractionnaire z/o et n un nombre fractionnaire (o-z)/o, z étant un nombre qui va de 0 à o, et une partie des radicaux -O-D-O- et -O-E-O-, indépendamment les uns des autres, sont remplacés par un ou plusieurs agents ramifiants trifonctionnels, d'où l'apparition à ces endroits d'un troisième site de liaison, une ramification de la chaîne de polyformal.

2. Polyformals et copolyfomals ramifiés selon la revendication 1, **caractérisés en ce que** l'un au moins des radicaux O-D-O et O-E-O représente le radical correspondant 1,1-bis-(4-hydroxyphényl)-3,3,5-trlméthylcyclohexane (bisphénol TMC).

3. Polyformals et copolyformals ramifiés selon la revendication 1, **caractérisés en ce que** -O-D-O- et -O-E-O- représentent chacun, indépendamment les uns des autres, un radical dérivé de

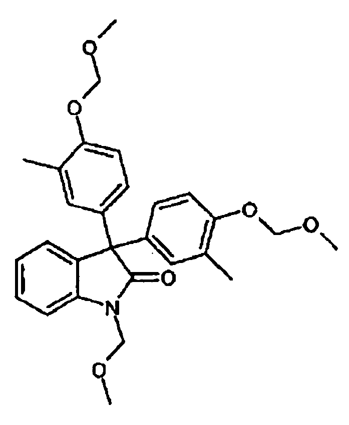

4. Utilisation des polyformals et copolyformals ramifiés selon la revendication 1 pour la fabrication d'objets moulés et d'extrudats.

5. Objets moulés et extrudats contenant les polyformals selon la revendication 1.

6. Plaques, feuilles, flacons et récipients contenant les polyformals selon la revendication 1.

7. Banques de données optiques contenant les polyformals selon la revendication 1.

8. Procédé pour la préparation des polyformals et copolyformals ramifiés selon la revendication 1 par réaction de bisphénol et d'agents ramifiants avec le chlorure de méthylène ou l'α,α-dichlorotoluène en solution homogène dans un solvant approprié à haut point d'ébullition en présence d'une base, à des températures de 30 à 160°C.

9. Procédé pour la préparation des polyformals et copolyformals ramifiés selon la revendication 8, **caractérisé en ce que** l'on sépare les impuretés cycliques par un traitement de précipitation ou de malaxage avec l'acétone.
